# EUROPEAN PATENT APPLICATION

(11) **EP 4 730 606 A1**
(43) Date of publication of application: **22.04.2026**
(21) Application number: 25209293.7
(22) Date of filing: 16.10.2025
(51) Int. Cl.: H02J 7/70

(54) **BATTERY PACK CHARGER AND POWER SUPPLY**

(30) Priority: 18.10.2024 US 202463709203 P
(71) Applicant: Milwaukee Electric Tool Corporation, Brookfield, WI 53005 (US)
(72) Inventor: LEMBERGER, Michael J, Brookfield, WI 53005 (US); CHAO, Paul C, Brookfield, WI 53005 (US); DYKSTRA, James K, Brookfield, WI 53005 (US); BRUCKS, Nicholas S, Brookfield, WI 53005 (US); EKHARE, Abhishek S, Brookfield, WI 53005 (US); SABOURY, Justin D, Brookfield, WI 53005 (US)
(74) Representative: Forresters IP LLP

(57) **Abstract**

A battery pack charger includes a battery pack interface configured to removably receive a battery pack, a charging circuit electrically connected to the battery pack interface, a discharging circuit electrically connected to the battery pack interface, and a common charging and discharging line connected to the charging circuit and the discharging circuit.

## Description

### CROSS-REFERENCE TO RELATED APPLICATIONS

This application claims the benefit of prior-filed, co-pending U.S. Provisional Application No. 63/709,203, filed October 18, 2024, and the entire contents of which are hereby incorporated by reference.

### SUMMARY

Power tool battery packs are used at worksites to operate various power tools. The power tool battery packs can be discharged and recharged by plugging the power tool battery pack to a battery pack charger. Battery pack chargers with discharging capability typically include distinct charging and discharging lines, but these distinct lines increase the size and cost of the battery pack charger.

In some embodiments, a battery pack charger includes a battery pack interface configured to removably receive a battery pack, a charging circuit electrically connected to the battery pack interface, a discharging circuit electrically connected to the battery pack interface, and a common charging and discharging line connected to the charging circuit and the discharging circuit.

In some embodiments, a battery pack charger includes a housing, a user interface, a battery pack interface disposed in a bay of the housing configured to removably receive a battery pack, a charging circuit disposed in the housing and electrically connected to the battery pack interface, a discharging circuit disposed in the housing and electrically connected to the battery pack interface, and a common charging and discharging line connected to the charging circuit and the discharging circuit.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 2" also discloses the range "from 2 to 2". The relative terminology may refer to plus or minus a percentage (e.g., 1%, 3%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other aspects of the embodiments will become apparent by consideration of the detailed description and accompanying drawings.

### BRIEF DESCRIPTION OF THE DRAWINGS

FIG. 1 illustrates a perspective view of a battery pack charger and power supply for charging and discharging a battery pack according to some examples.
FIG. 2 illustrates a schematic of current paths of the battery pack charger and power supply of FIG. 1 according to some examples.
FIG. 3 illustrates a schematic of current paths of the battery pack charger and power supply of FIG. 1 according to some examples.
FIG. 4 illustrates a block diagram of the battery pack charger and power supply of FIG. 1 according to some examples.
FIG. 5 illustrates a flowchart for an example method of charging and discharging a battery pack using the battery pack charger and power supply of FIG. 1.

Various features and advantages are set forth in the following claims.

### DETAILED DESCRIPTION

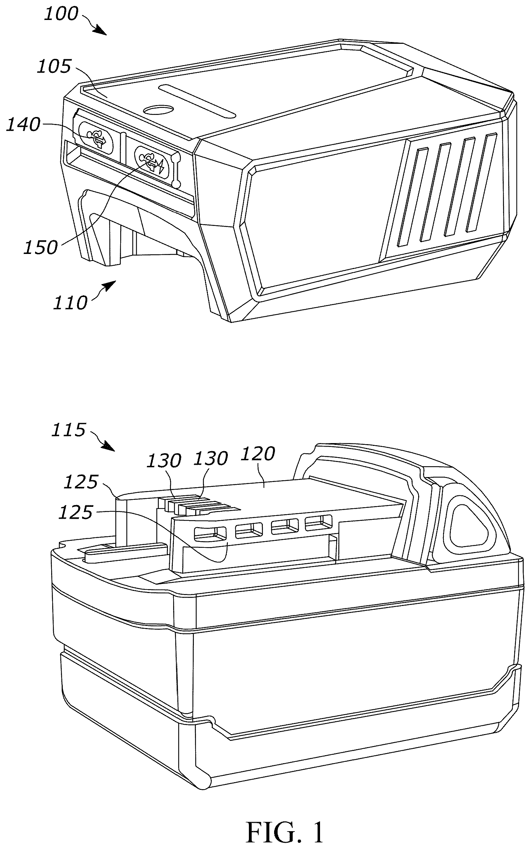

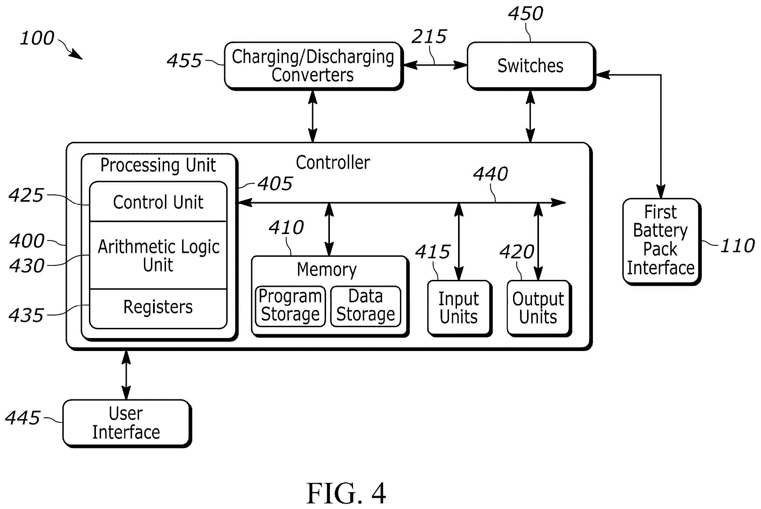

FIG. 1 illustrates an example battery pack charger and power supply 100. The battery pack charger and power supply 100 includes a charger housing 105, a battery pack interface 110 configured to removably receive a battery pack 115, and a user interface (See FIG. 4, 445). In the illustrated embodiment, the battery pack interface 110 is provided on a bottom side of the charger housing 105 (e.g., on a first side of the charger housing 105). The battery pack interface 110 is configured to removably (e.g., slidably) receive the first battery pack 115. Although not shown, the battery pack interface 110 includes a terminal block including terminals (e.g., power terminals and communication terminals) to connect to the corresponding battery pack terminal blocks of the battery pack 115. In some examples the battery pack charger and power supply 100 may have a different configuration than illustrated in FIG. 1.

The battery pack 115 is, for example, a power tool battery pack configured to be used to operate battery-powered power tools. In some examples, the battery pack 115 is an 18 Volts (V) nominal voltage lithium-ion-chemistry-based power tool battery pack. In other examples, the battery pack 115 may have a different nominal voltage (e.g., 12 V, 36 V, 72 V, and the like) and different chemistry (e.g., nickel based). The battery pack 115 may include a connection portion 120 with two parallel, spaced apart rails 125 configured such that the battery pack 115 may be slidably engaged with a sliding-type battery pack interface of a power tool. The connection portion 120 also includes battery terminals 130 to electrically connect the battery pack 115 to charger terminals of the battery pack charger and power supply 100 or to another device, such as a power tool.

An AC outlet 140, and a DC outlet 150 are provided on a face of the charger housing 105. Although not shown, the battery pack charger and power supply 100 may include a user interface (e.g., provided on a side surface of the charger housing 105). The user interface may include a display (e.g., an LCD display, an LED display, an e-ink display, etc.), an AC enable button, and a DC enable button. The user interface may provide indications (e.g., via the display) regarding the status of the battery pack charger and power supply 100. For example, the user interface may show a fuel gauge relating to the battery pack 115, a status of the AC outlet, a status of the DC outlet, etc. The AC and DC enable buttons may be, for example, push buttons switch configured to enable and disable the provision of power from a connected battery pack 115 to a device connected to the battery pack charger and power supply 100 via the AC outlet 140 or the DC outlet 150, respectfully. While a single AC outlet 140 and a single DC outlet 150 are illustrated in FIG. 1, other examples of the battery pack charger and power supply 100 may include any number of AC outlets and any number of DC outlets.

In the example illustrated, the first DC outlet is a Universal Serial Bus-C (USB-C) Power Delivery (PD) outlet configured to provide a power output at a predetermined maximum (e.g., 100 watts). In other examples, additional DC outlet may be another type of DC outlet (e.g., USB-A, USB-B, etc.) configured to provide a power output at a higher or lower predetermined maximum (e.g., 15 watts, 120 watts). Additionally, although the battery pack charger and power supply 100 shown in FIG. 1 is a single-bay battery pack charger, the systems and functions herein may also be integrated into a multi-bay battery pack charger.

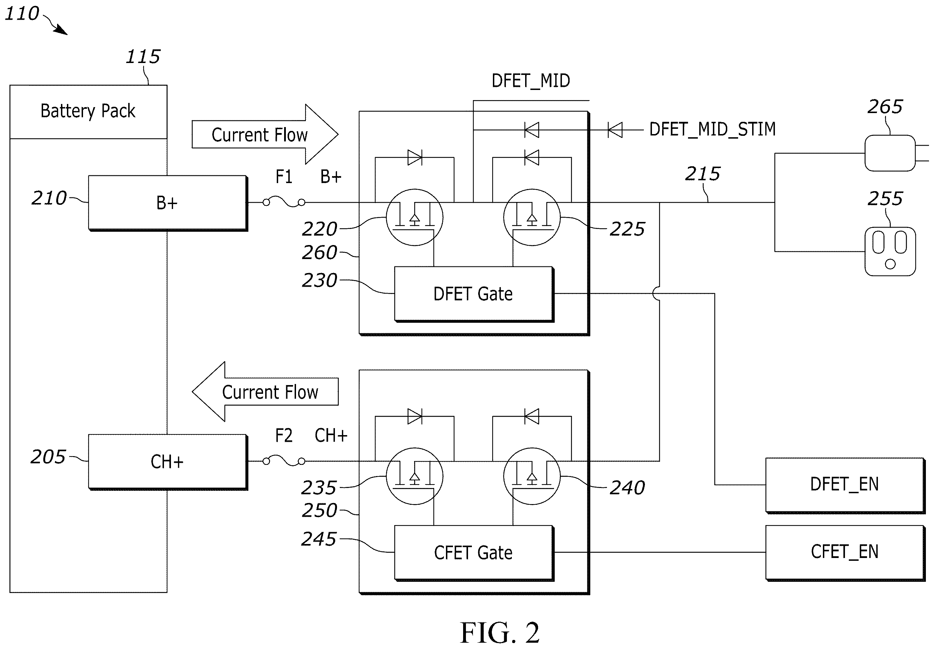

FIG. 2 illustrates a schematic of a battery pack interface 110 including a charging terminal 205 and a discharging terminal 210 connected to the battery pack 115. In the embodiment shown, during a discharging operation, current is drawn from the battery pack 115 via the discharging terminal 210 to supply power to a power outlet 255 (e.g., AC power outlet 140, DC power outlet 150) via a common charging and discharging line 215. During a charging operation, power from a power input 265 is supplied to charge the battery pack 115 via the common charging and discharging line 215 and the charging terminal 205. Switches 220 and 225 of a discharging circuit 260 electrically connect the discharging terminal 210 of the battery pack interface 110 to the common charging and discharging line 215 and are configured to be controlled by controller 400 (See FIG. 4) via a gate driver 230. Two switches 220, 225 are provided for redundancy and extra protection. In some examples, a single discharge switch may be used. Switches 235 and 240 of the charging circuit 250 electrically connect the charging terminal 205 of the battery pack interface 110 to the common charging and discharging line 215 and are configured to be controlled by the controller 400 via a gate driver 245. Two switches 220, 225 are provided for redundancy and extra protection. In some examples, a single charge switch may be used. The discharging terminal 210 and charging terminal 205 are connected to the combined charging and discharging line 215. In the illustrated embodiment, the controller 400 is configured to ensure that the switch 220 is only closed when switch 235 is open, and that switch 235 is only closed when switch 220 is open, so that the common charging and discharging line 215 is used for only charging or only discharging the battery pack 115 at any given time (i.e., in a mutually exclusive manner). Additionally, this approach to the control of switches 220, 225, 235, 240 further ensures that no reverse current flows to the discharging terminal 210 or from the charging terminal 205.

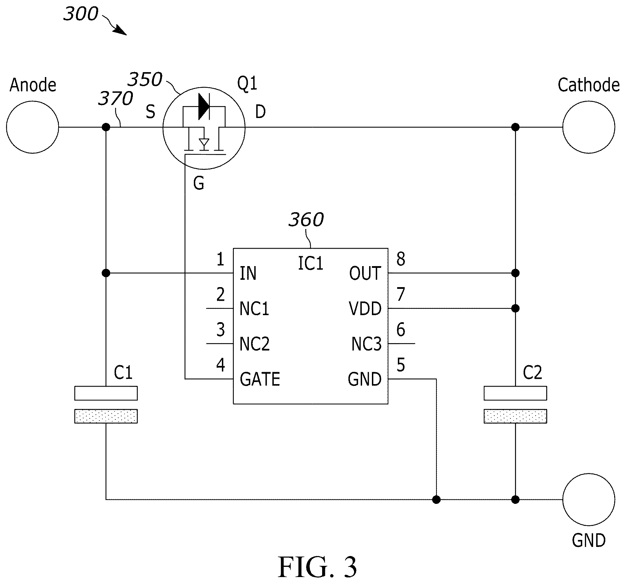

In some examples, additional hardware protection circuit may be used to prevent reverse current flow to/from the charging terminal 205 and the discharging terminal 210. For example, a forward biased diode (forward biased with respect to expected direction of current) may be provided in each of the charging circuit 250 and the discharging circuit 260. FIG. 3 illustrates a hardware protection circuit 300 for preventing a flow of reverse current into the charging terminal 205 and the discharging terminal 210 of the battery pack charger and power supply 100. The hardware protection circuit 300 shown includes a field-effect transistor (FET) 350 and an ideal diode controller 360 configured to control the FET 350. During normal operation, the ideal diode controller 360 monitors an input line 370 for a negative voltage with respect to a ground. Upon detecting a reverse voltage, which would indicate a reverse flow of current, the ideal diode controller 360 opens the FET 350 to stop the flow of reverse current. To simplify the firmware of the switch control method described herein, the hardware protection circuit 300 may be used in place of switches 220, 225, 235, 240, and the gate drivers 230, 245 (as shown in FIG. 2). The hardware protection circuit 300 receives signals for controlling the FET 350 for normal charging/discharging operation as described above with respect to switches 220, 225, 235, 240.

FIG. 4 illustrates a schematic of the controller 400 of the battery pack charger and power supply 100. The controller 400 is electrically and/or communicatively connected to a variety of modules or components of the battery pack charger and power supply 100. For example, the illustrated controller 400 is connected to a user interface 445, a plurality of switches 450, and charging/discharging converters 455. The controller 400 provides control signals to control the user interface 445, the plurality of switches 450, and the charging/discharging converters 455. In some embodiments, the controller 400 is configured to control the plurality of switches 450, and the charging/discharging converters 455 in response to a selection received via the user interface 445. For example, in some embodiments, the user interface 445 provides elements that allow a user to select to either charge or discharge a connected battery pack 115.

The controller 400 includes combinations of hardware and software that are operable to, among other things, control the operation of the battery pack charger and power supply 100. For example, the controller 400 includes, among other things, a processing unit 405 (e.g., a microprocessor, a microcontroller, an electronic processor, an electronic controller, or another suitable programmable device), a memory 410, input units 415, and output units 420. The processing unit 405 includes, among other things, a control unit 425, an arithmetic logic unit ("ALU") 430, and a plurality of registers 435 (shown as a group of registers in FIG. 4) and is implemented using a known computer architecture (e.g., a modified Harvard architecture, a von Neumann architecture, etc.). The processing unit 405, the memory 410, the input units 415, and the output units 420, as well as the various modules or circuits connected to the controller 400 are connected by one or more control and/or data buses (e.g., common bus 440). The control and/or data buses are shown generally in FIG. 4 for illustrative purposes. Although the controller 400 is illustrated in FIG. 4 as one controller, the controller 400 could also include multiple controllers configured to work together to achieve a desired level of control for the battery pack charger and power supply 100. As such, any control functions and processes described herein with respect to the controller 400 could also be performed by two or more controllers functioning in a distributed manner.

The memory 410 is a non-transitory computer readable medium and includes, for example, a program storage area and a data storage area. The program storage area and the data storage area can include combinations of different types of memory, such as a read only memory ("ROM"), a random access memory ("RAM") (e.g., dynamic RAM ["DRAM"], synchronous DRAM ["SDRAM"], etc.), electrically-erasable programmable ROM ("EEPROM"), flash memory, a hard disk, an SD card, or other suitable magnetic, optical, physical, or electronic memory devices. The processing unit 405 is connected to the memory 410 and is configured to execute software instructions that are capable of being stored in a RAM of the memory 410 (e.g., during execution), a ROM of the memory 410 (e.g., on a generally permanent basis), or another non-transitory computer readable medium such as another memory or a disc. Software included in the implementation of the battery pack charger and power supply 100 and controller 400 can be stored in the memory 410 of the controller 400. The software includes, for example, firmware, one or more applications, program data, filters, rules, one or more program modules, and other executable instructions. The controller 400 is configured to retrieve from the memory 410 and execute, among other things, instructions related to the control processes and methods described herein. In other embodiments, the controller 400 includes additional, fewer, or different components.

The plurality of switches 450 include, for example, the switches 220, 225, 235, 240, and/or FET 350. As shown in FIG. 2, the plurality of switches 450 may be controlled using gate drivers 230, 245, and/or ideal diode controller 360. The plurality of switches 450 are controlled such that only one of the charging terminal 205 or the discharging terminal 210 is connected to the charging and discharging line 215 that provide power or receives power from the charging/discharging converters 455.

The charging/discharging converters 455 include, for example, an AC-DC converter configured to convert AC power from a power input 265 to DC power for charging the battery pack 115, a DC-AC converter configured to convert DC power from the battery pack 115 to AC power to be provided at the AC outlet 140, a DC-DC converter configured to convert DC power from the battery pack 115 at a first voltage to a second voltage suitable for the DC outlet 150. The operation of the charging/discharging converters 455 is controlled by the controller 400.

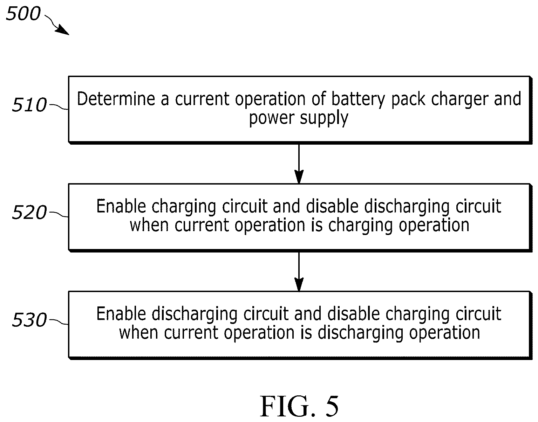

FIG. 5 is a flowchart for a method 500 of charging and discharging a battery pack 115 using the battery pack charger and power supply 100. At block 510, the method 500 includes determining, using the controller 400, a current operation of the battery pack charger and power supply 100. The current operation may include a charging operation and a discharging operation. The charging operation may automatically commence when the battery pack charger and power supply 100 is connected to a power source and the connected battery pack 115 is less than fully charged. The discharging operation may commence when one of the AC enable or DC enable buttons is actuated and the charger is not connected to a power supply and/or when the battery pack is fully charged. The discharging operation may commence when the controller 400 determines that an AC plug is received in the AC outlet 140 and that a battery pack 115 having a non-zero state of charge is connected to the battery pack interface 110. The discharging operation may also commence when the controller 400 determines that an DC plug is received in the DC outlet 150 and that a battery pack 115 having a non-zero state of charge is connected to the battery pack interface 110. In some embodiments, charging only commences in response to a user interacting with the user interface 445 (e.g., when the user presses a button or selects a "charge" option on a display screen).

At block 520, the method 500 includes enabling, using the controller 400, the charging circuit 250 and disabling discharging circuit 260 when the current operation of the battery pack charger and power supply 100 is a charging operation. The controller 400 closes the charge switches 235, 240 to provide charging power from the power input 265 to the battery pack 115 for charging. The controller 400 also opens the discharge switches 220, 225 to disable reverse current flow to the battery pack 115 through the discharging terminal 210.

At block 530, the method 500 includes enabling, using the controller 400, the discharging circuit 260 and disabling the charging circuit 250 when the current operation of the battery pack charger and power supply 100 is a discharging operation. The controller 400 closes the discharge switches 220, 225 to provide power from the battery pack 115 to one or more of the AC outlet 140 and the DC outlet 150. The controller 400 also opens the charge switches 235, 240. In some examples, the charge switches 235, 240 need not be disabled during a discharging operation.

### REPRESENTATIVE FEATURES

Representative features are set out in the following clauses, which stand alone or may be combined, in any combination, with one or more features disclosed in the text and/or drawings of the specification.

Clause 1. A battery pack charger comprising: a battery pack interface configured to removably receive a battery pack; a charging circuit electrically connected to the battery pack interface; a discharging circuit electrically connected to the battery pack interface; and a common charging and discharging line connected to the charging circuit and the discharging circuit.

Clause 2. The battery pack charger of clause 1 further comprising an electronic processor electrically connected to the charging circuit and the discharging circuit and configured to charge, using the charging circuit, the battery pack; and discharge, using the discharging circuit, the battery pack.

Clause 3. The battery pack charger of clause 2, wherein the electronic processor is configured to open a discharging switch of the discharging circuit during charging of the battery pack.

Clause 4. The battery pack charger of clause 3, further comprising a charging switch, wherein the electronic processor is configured to control the discharging switch and the charging switch such that common charging and discharging line is used for only charging or only discharging the battery pack at any given time.

Clause 5. The battery pack charger of clause 3-4, wherein the electronic processor is configured to close the discharging switch and commence a discharging operation in response to determining that an AC connector is received in an AC outlet of the battery pack charger and power supply and that the battery pack is connected to the battery pack interface and has a non-zero state of charge.

Clause 6. The battery pack charger of clause 3-5, wherein the electronic processor is configured to close the discharging switch and commence a discharging operation in response to determining that a DC connector is received in a DC outlet of the battery pack charger and power supply and that the battery pack is connected to the battery pack interface and has a non-zero state of charge.

Clause 7. The battery pack charger of clause 1-6, wherein the discharging circuit includes an ideal diode controller, the ideal diode controller being connected to a discharging switch of the discharging circuit and configured to open the discharging switch in response to detecting a flow of a reverse current in the discharging circuit.

Clause 8. The battery pack charger of clause 7, further including a hardware protection circuit connected to the ideal diode controller, wherein the ideal diode controller is configured to detect the flow of reverse current in the discharging circuit includes monitoring an input line of the hardware protection circuit for a negative voltage with respect to a ground of the hardware protection circuit.

Clause 9. A battery pack charger comprising: a power input; a power output; a battery pack interface configured to removably receive a battery pack; a charging circuit electrically connected to the battery pack interface; a discharging circuit electrically connected to the battery pack interface; and a common charging and discharging line connected to the charging circuit, the discharging circuit, the power input, and the power output.

Clause 10. The battery pack charger of clause 9 further comprising an electronic processor electrically connected to the charging circuit and the discharging circuit and configured to charge, using the charging circuit, the battery pack; and discharge, using the discharging circuit, the battery pack.

Clause 11. The battery pack charger of clause 10, wherein the electronic processor is configured to open a discharging switch of the discharging circuit during charging of the battery pack.

Clause 12. The battery pack charger of clause 11, further comprising a charging switch, wherein the electronic processor is configured to control the discharging switch and the charging switch such that common charging and discharging line is used for only charging or only discharging the battery pack at any given time.

Clause 13. The battery pack charger of clause 11-12, wherein the electronic processor is configured to close the discharging switch and commence a discharging operation in response to determining that an AC connector is received an AC outlet of the battery pack charger and power supply and that the battery pack is connected to the battery pack interface and has a non-zero state of charge.

Clause 14. The battery pack charger of clause 11-13, wherein the electronic processor is configured to close the discharging switch and commence a discharging operation in response to determining that an DC connector is received in a DC outlet of the battery pack charger and power supply and that the battery pack is connected to the battery pack interface and has a non-zero state of charge.

Clause 15. The battery pack charger of clause 9-14, wherein the discharging circuit includes an ideal diode controller, the ideal diode controller being connected to a discharging switch of the discharging circuit and configured to open the discharging switch in response to detecting a flow of a reverse current in the discharging circuit.

Clause 16. The battery pack charger of clause 15, further including a hardware protection circuit connected to the ideal diode controller, wherein the ideal diode controller is configured to detect the flow of reverse current in the discharging circuit includes monitoring an input line of the hardware protection circuit for a negative voltage with respect to a ground of the hardware protection circuit.

Clause 17. A method of controlling charging and discharging operations of a battery pack charger and power supply including a common charging and discharging line, the method comprising: determining, via an electronic processor of the battery pack charger, a current operation of the battery pack charger and power supply; disabling a discharging circuit of the battery pack charger and power supply, via the electronic processor, in response to determining that the current operation of the battery pack charger and power supply is a charging operation; disabling a charging circuit of the battery pack charger and power supply and power supply, via the electronic processor, in response to determining that the current operation of the battery pack charger and power supply is a charging is discharging operation; providing, via the common charging and discharging line, a charging current from a power input of the battery pack charger and power supply to the charging circuit; and, providing, via the common charging and discharging line, a discharging current from a discharging circuit of the battery pack charger and power supply to a power output of the battery pack charger and power supply.

Clause 18. The method of clause 17, further including detecting, via an ideal diode controller connected to the common charging and discharging line, a flow of reverse current in the discharging circuit; and opening, via the electronic processor, a switch of the discharging circuit to stop the flow of reverse current.

Clause 19. The method of clause 18, wherein detecting the flow of reverse current includes monitoring, via the ideal diode controller, an input line of a hardware protection circuit connected to the ideal diode controller for a negative voltage with respect to a ground of the hardware protection circuit.

Clause 20. The method of clause 17-19, further including providing, via an AC outlet or a DC outlet of the battery pack charger and power supply, the discharging power from a battery pack to connected devices
Thus, embodiments described herein provide, among other things, a battery pack charger and power supply and method for charging and discharging a battery pack via a common charging and discharging line. Various features and advantages are set forth in the following claims.

## Claims

1. A battery pack charger comprising:
a battery pack interface configured to removably receive a battery pack;
a charging circuit electrically connected to the battery pack interface;
a discharging circuit electrically connected to the battery pack interface; and
a common charging and discharging line connected to the charging circuit and the discharging circuit.

2. The battery pack charger of claim 1 further comprising an electronic processor electrically connected to the charging circuit and the discharging circuit and configured to
charge, using the charging circuit, the battery pack; and
discharge, using the discharging circuit, the battery pack.

3. The battery pack charger of claim 2, wherein the electronic processor is configured to open a discharging switch of the discharging circuit during charging of the battery pack,
preferably further comprising
a charging switch,
wherein the electronic processor is configured to control the discharging switch and the charging switch such that common charging and discharging line is used for only charging or only discharging the battery pack at any given time.

4. The battery pack charger of claim 3, wherein:
the electronic processor is configured to close the discharging switch and commence a discharging operation in response to determining that an AC connector is received in an AC outlet of the battery pack charger and power supply and that the battery pack is connected to the battery pack interface and has a non-zero state of charge, or
the electronic processor is configured to close the discharging switch and commence a discharging operation in response to determining that a DC connector is received in a DC outlet of the battery pack charger and power supply and that the battery pack is connected to the battery pack interface and has a non-zero state of charge.

5. The battery pack charger of claim 1, wherein the discharging circuit includes an ideal diode controller, the ideal diode controller being connected to a discharging switch of the discharging circuit and configured to open the discharging switch in response to detecting a flow of a reverse current in the discharging circuit,
preferably further including
a hardware protection circuit connected to the ideal diode controller,
wherein the ideal diode controller is configured to detect the flow of reverse current in the discharging circuit includes monitoring an input line of the hardware protection circuit for a negative voltage with respect to a ground of the hardware protection circuit.

6. A battery pack charger comprising:
a power input;
a power output;
a battery pack interface configured to removably receive a battery pack;
a charging circuit electrically connected to the battery pack interface;
a discharging circuit electrically connected to the battery pack interface; and
a common charging and discharging line connected to the charging circuit, the discharging circuit, the power input, and the power output.

7. The battery pack charger of claim 6 further comprising an electronic processor electrically connected to the charging circuit and the discharging circuit and configured to
charge, using the charging circuit, the battery pack; and
discharge, using the discharging circuit, the battery pack.

8. The battery pack charger of claim 7, wherein the electronic processor is configured to open a discharging switch of the discharging circuit during charging of the battery pack,
preferably further comprising a charging switch,
wherein the electronic processor is configured to control the discharging switch and the charging switch such that common charging and discharging line is used for only charging or only discharging the battery pack at any given time.

9. The battery pack charger of claim 8, wherein:
the electronic processor is configured to close the discharging switch and commence a discharging operation in response to determining that an AC connector is received an AC outlet of the battery pack charger and power supply and that the battery pack is connected to the battery pack interface and has a non-zero state of charge, or
the electronic processor is configured to close the discharging switch and commence a discharging operation in response to determining that an DC connector is received in a DC outlet of the battery pack charger and power supply and that the battery pack is connected to the battery pack interface and has a non-zero state of charge.

10. The battery pack charger of claim 6, wherein the discharging circuit includes an ideal diode controller, the ideal diode controller being connected to a discharging switch of the discharging circuit and configured to open the discharging switch in response to detecting a flow of a reverse current in the discharging circuit.

11. The battery pack charger of claim 10, further including a hardware protection circuit connected to the ideal diode controller,
wherein the ideal diode controller is configured to detect the flow of reverse current in the discharging circuit includes monitoring an input line of the hardware protection circuit for a negative voltage with respect to a ground of the hardware protection circuit.

12. A method of controlling charging and discharging operations of a battery pack charger and power supply including a common charging and discharging line, the method comprising:
determining, via an electronic processor of the battery pack charger, a current operation of the battery pack charger and power supply;
disabling a discharging circuit of the battery pack charger and power supply, via the electronic processor, in response to determining that the current operation of the battery pack charger and power supply is a charging operation;
disabling a charging circuit of the battery pack charger and power supply and power supply, via the electronic processor, in response to determining that the current operation of the battery pack charger and power supply is a charging is discharging operation;
providing, via the common charging and discharging line, a charging current from a power input of the battery pack charger and power supply to the charging circuit; and,
providing, via the common charging and discharging line, a discharging current from a discharging circuit of the battery pack charger and power supply to a power output of the battery pack charger and power supply.

13. The method of claim 12, further including
detecting, via an ideal diode controller connected to the common charging and discharging line, a flow of reverse current in the discharging circuit; and
opening, via the electronic processor, a switch of the discharging circuit to stop the flow of reverse current.

14. The method of claim 13, wherein detecting the flow of reverse current includes
monitoring, via the ideal diode controller, an input line of a hardware protection circuit connected to the ideal diode controller for a negative voltage with respect to a ground of the hardware protection circuit.

15. The method of claim 12, further including providing, via an AC outlet or a DC outlet of the battery pack charger and power supply, the discharging power from a battery pack to connected devices.
